# EUROPÄISCHE PATENTSCHRIFT

(11) **EP 2 718 691 B1**
(45) Veröffentlichungstag und Bekanntmachung des Hinweises auf die Patenterteilung: **13.12.2017**
(21) Anmeldenummer: 11729372.0
(22) Anmeldetag: 09.06.2011
(51) Int. Cl.: G01N 21/05, G01N 21/15, G01N 21/35, G01N 21/03, G01N 21/3504

(54) **VERFAHREN UND VORRICHTUNG ZUM BESTIMMEN DER KONZENTRATION EINES IN EINER FLÜSSIGEN PROBE ENTHALTENEN ANALYTEN**
METHOD AND APPARATUS FOR DETERMINING THE CONCENTRATION OF AN ANALYTE CONTAINED IN A LIQUID SAMPLE
PROCÉDÉ ET DISPOSITIF POUR LA DÉTERMINATION DE LA CONCENTRATION D'UN ANALYTE CONTENU DANS UN ÉCHANTILLON LIQUIDE

(43) Veröffentlichungstag der Anmeldung: 16.04.2014
(73) Patentinhaber: QFood GmbH, 79194 Freiburg (DE)
(72) Erfinder: SEIDEL, Robert, 79102 Freiburg (DE); BEDNAR, Sonja, 79194 Gundelfingen (DE)
(74) Vertreter: Huwer, Andreas
(86) Internationale Anmeldenummer: PCT/EP2011/002836
(87) Internationale Veröffentlichungsnummer: WO 2012/167805

(56) Entgegenhaltungen:
- WO-A1-2004/036193
- WO-A1-2004/097381
- WO-A1-2010/118749
- GB-A- 2 391 307
- US-A1- 2008 076 189
- US-A1- 2009 206 242

## Beschreibung

Die Erfindung betrifft eine Vorrichtung zum Bestimmen der Konzentration wenigstens eines in einer Probe enthaltenen Analyten mittels Infrarot-Absorptions- und/oder Transmissionsmessung, umfassend eine Messkammer, die eine Innenhöhlung zur Aufnahme der Probe aufweist, wobei die Innenhöhlung durch mindestens eine Kammerwand begrenzt ist, die für Infrarotstrahlung durchlässig ist, wobei die mindestens eine Kammerwand an ihrer an die Innenhöhlung angrenzenden Oberfläche eine homogene, für Infrarotstrahlung durchlässige Beschichtung aufweist. Außerdem bezieht sich die Erfindung auf ein Verfahren zum Bestimmen der Konzentration wenigstens eines in einer Probe enthaltenen Analyten mittels infrarot-Absorptions- und/oder Transmissionsmessung. Die Probe kann gasförmig oder fest vorliegen, ist jedoch bevorzugt flüssig.

### Stand der Technik

Messungen im infraroten (IR) Bereich erlauben eine Vielzahl von Bestimmungen an komplexen Analyten. Fast jede Substanz hat ein spezifisches IR Spektrum, das vor allem im mittleren Infrarot (MIR) Bereich sehr prominent auftritt und deswegen auch als "Fingerabdruck" der Substanz bezeichnet wird. Problematisch ist jedoch dabei, dass wässrige Proben mit herkömmlichen MIR Anlagen nur schlecht gemessen werden können, da Wasser das verwendete Infrarot-Licht stark absorbiert. Um wässrige Proben zu messen werden deswegen heutzutage entweder eine auf dem Prinzip der abgeschwächten Totalreflexion beruhende ATR-Zellen (Attenuated Total Reflection) verwendet oder es wird in einer Flusszelle mit möglichst reproduzierbarer Dicke gemessen.

Eine solche Flusszelle ist z.B. in der EP 1 549 928 B1 beschrieben. Sie weist eine Messkammer auf, die zwei als optische Fenster ausgestaltete Kammerwände hat, zwischen denen eine Innenhöhlung zur Aufnahme einer Probe gebildet ist. Ein der beiden Kammerwände wird von zwei Probendurchflusskanälen durchsetzt, die mit der Innenhöhlung verbunden sind. Die an die Probe angrenzenden Oberflächen der IR Messkammer haben die Eigenschaft, in der Probe enthaltene Moleküle zu binden. Außerdem haben die Kammerwände nur eine geringe Stabilität in wässrigen Medien. So werden Infrarot-Fenster aus CaF₂ z.B. leicht von Säuren und Chelatoren angegriffen. Jede auch nur minimale Änderung der Messkammer oder der Umgebungsparameter führt zu einer Änderung der Messparameter und muss durch entsprechende wiederkehrende Kalibrierungen ausgeglichen werden. Flüssige Proben sind im MIR Bereich nur in einer Dicke von unter 30 µm, bevorzugt unter 10 µm für das zur Untersuchung verwendete Licht durchlässig.

Es werden immer möglichst zeitnah zwei Messungen gemacht, Hintergrund- und Probenmessung, und daraus wird ein Differenzspektrum erzeugt. Dies geschieht, um z.B. Außeneinflüsse und Geräteparameter herausrechnen zu können. Die regelmäßig in Verbindung mit jeder oder fast jeder Messung durchzuführende Hintergrundmessung, die als Kalibriermessung zu sehen sein könnte, erfordert eine aufwändige Fluidik oder Spülung der Zelle und des restlichen Systems. Es sind sehr hohe Drücke erforderlich, was hohe Kosten mit sich bringt.

Zwei Spektren von unterschiedlichen Proben sind nur dann vergleichbar, wenn sich zwischen diesen Messungen nichts geändert hat, was sich auf das Spektrum auswirkt. Je nach Aufbau des Spektrometers und der Optik kann dies die Luftfeuchtigkeit sein oder die Temperatur oder die Schichtdicke der Probe. Unter der Schichtdicke der Probe wird bei einer Transmissions- oder Reflektionsmessung die Schichtdicke in der Messkammer verstanden, durch welche die Messung stattfindet. Nach dem Stand der Technik darf die Schichtdicke zwischen zwei Messungen nicht mehr als 1 nm variieren. Um Messungen vergleichbar zu machen, müssen zwischen zwei Messungen Differenzen von weniger als 1/1.000 besser 1/10.000 der Schichtdicke vorliegen. Wenn sich die Schichtdicke der Messkammer durch den Injektionsdruck der Proben ändert oder z.B. eine Anreicherung durch Anlagerung von Substanzen stattfindet, wird dadurch die Reproduzierbarkeit der Messung und damit die Quantifizierung der Proben erschwert bis unmöglich gemacht.

Aus GB 2 391 307 A ist ein optischer Sensor der eingangs genannten Art bekannt, der zum Bestimmen der Konzentration eines in einer Probe enthaltenen Analyten, nämlich von in einem Abgasstrom enthaltenem CO, C02, NON und HO, anhand ihrer Infrarot-Absorptionsspektren dient. Die Vorrichtung hat eine Infrarotquelle und einen Infrarotdetektor. Der Sensor umfasst eine Zelle für die Gasprobe, die dazu angeordnet ist, eine Gasprobe von einem Abgasstrom über ein Einlassrohr zu empfangen. Das Einlassrohr ist mit einem Hauptabgasrohr eines Motors verbunden. Im Betrieb fließt die Gasprobe durch das Einlassrohr, die Zelle und das Ausgangsrohr. Danach wird die Gasprobe zum Hauptabgasvolumen zurückgeführt. Die Gaszelle umfasst ein Ein- bzw. Auslassfenster, die sich am Ein- bzw. Auslass der Zelle befinden.

Mittels eines Emittermoduls, umfassend eine IR-Quelle bzw. eine UV-Quelle, wird jeweils über Lichtfasern einerseits IR-Strahlung in die Zelle bis zu einem Innenraum eingekoppelt und andererseits UV Strahlung zur Reinigung des Fensters bereitgestellt. Die Lichtfasern sind mit dem Einlassfenster der Zelle verbunden. Die IR-Strahlung wird durch den Innenraum der Zelle, der die Abgasprobe enthält, und anschließend durch das Auslassfenster transmittiert und gelangt somit mittels eines Verbindungselements und einer weiteren Lichtfaser zu einer Detektoreinheit.

Diese Detektoreinheit ist für Wellenlängen im Infrarotbereich empfindlich, jedoch für Wellenlänge im UV-Bereich unempfindlich. Die IR-Strahlung wird daher von Gaskomponenten in der Abgasprobe bei entsprechenden Wellenlängen absorbiert, wobei die Stärke dieser Absorption eine Konzentrationsmessung darstellt. Die innere Oberflächen der Fenster sind mit einer Schicht von z.B. TiO₂ beschichtet, die eine hohe Transmission im IR-Bereich aufweist und bei UV-Bestrahlung an der Oberfläche befindliche Analytbestandteile katalytisch entfernt. Zusätzlich zu ihrer selbst-reinigenden Funktion ist die Schicht hydrophob.

### Aufgabenstellung

Der Aufgabe der Erfindung ist, ein Verfahren und eine Vorrichtung der eingangs genannten Art zu schaffen, die es ermöglichen, die Messbedingungen bei der Infrarot-Absorptions- und/oder Transmissionsmessung wässriger Proben weitestgehend konstant zu halten, damit Kalibrierdaten eine mittel- bis langfristige Gültigkeit haben. So soll ein preisgünstiges System erreicht werden, was auch für den Gebrauch als Disposable oder für nur wenige Anwendungen möglich macht und eine aufwändige Fluidik vermeidet.

### Lösung

Diese Aufgabe wird bezüglich der Vorrichtung mit den Merkmalen des Anspruchs 1 gelöst.

Um eine gegen die Anlagerung von in der Probe enthaltenen Molekülen unempfindliche Oberfläche zu ermöglichen, weist die Beschichtung Copolymere auf, die funktionelle Gruppen (z.B. Sulfonsäuren oder Phosphonsäuren) enthalten und Gruppen, die inert wirken, nämlich fluorierte Kohlenwasserstoffgruppen oder Polyethergruppen (z.B. Oligo- oder Polyethylenglykol).

Bezüglich des Verfahrens wird die vorstehend genannte Aufgabe durch folgende Schritte gelöst:
- Bereitstellen einer Vorrichtung nach Anspruch 1,
- Einbringen eines Referenzmediums in die Innenhöhlung,
- Erfassung eines von der Infrarot-Absorption und/oder -Transmission der durch die mindestens eine Kammerwand, die Beschichtung und die Referenzflüssigkeit gebildeten Anordnung, abhängigen Referenzsignals,
- Entfernen der Referenzflüssigkeit aus der Innenhöhlung,
- Einbringen der Probe in die Innenhöhlung,
- Erfassung eines von der infrarot-Absorption der durch die Kammerwand, die Beschichtung und die Probe gebildeten Anordnung abhängigen Messsignals,
- Ermitteln eines von dem Unterschied zwischen dem Referenzsignal und dem Messsignal abhängigen kalibrierten Messsignals.

Zwischen diesen Schritten kann ein größerer Zeitraum liegen. Das Referenzsignal muss nicht bei jeder oder fast jeder Messung gemessen werden, es kann auch auf ein gespeichertes Referenzsignal zurückgegriffen werden.

Teile der Messkammer werden also mit einer extrem dünnen und homogenen Schicht überzogen, die Anlagerungen von Fremdsubstanzen an die Oberfläche verhindern bzw. weitgehend verhindern und durch deren besondere Ausgestaltung die Probenbefüllung und den Probenaustausch sowie die Reinigung besonders einfach ist. Eine homogene Schicht im Sinne der Erfindung weist eine durchgehend gleiche chemische Struktur auf und variiert in der Dicke weniger als 10%, bevorzugt weniger als 5%.

Ein wichtiger Teil der Problemlösung besteht darin, z.B. durch hohe Integration der Bauteile der Vorrichtung die optischen Wege der Strahlung zu minimieren, um Störungen zu vermeiden. In vorteilhafter Weise wird durch die chemisch inerte Oberflächenbeschichtung der mindestens einen Kammerwand die Anlagerung von Substanzen an der der Innenhöhlung zugewandten Oberfläche der Kammerwand weitestgehend vermieden. Die Messkammer ist bevorzugt als Küvette ausgestaltet, die einander gegenüberliegende Kammerwände hat, deren die an die Innenhöhlung angrenzende Oberflächen genau parallel zueinander verlaufen, so dass die Schichtdicke der zwischen den Kammerwänden befindlichen Probe gleichmäßig ist. Somit ergeben sich bei der infrarot-Absorptionsmessung konstante Messbedingungen und es können quantitative und vergleichbare Messungen weitgehend frei von Drift durchgeführt werden. Unter "weitgehend frei von Drift" wird verstanden, dass die Vorrichtung z.B. mit dem Referenzlösungsmittel Wasser innerhalb zweier aufeinander folgender Messungen, die nicht länger als einen Monat auseinander liegen, 95,0%, insbesondere 99%, besonders bevorzugt über 99,5% identische Messwerte liefert. Im Idealfall 99,99% bis 100% identische Messwerte.

Eine inerte Beschichtung oder Oberflächenmodifikation im Sinne der Erfindung ist eine Beschichtung welche die Anlagerung von Analytbestandteilen an der Oberfläche des beschichteten Gegenstandes verhindert. Eine inerte Beschichtung kann durch chemische Bindung (kovalent) oder durch physikalische Bindung (Adsorption, Physisorption) aufgebracht werden.

Die erfindungsgemäße Vorrichtung kann sowohl für Infrarot-Messungen im Transmissions-, im Reflektions- als auch im ATR-Verfahren oder für eine Kombination aus allem geeignet sein. Beim Transmissionsverfahren erfolgt die Messung im Durchlichtprinzip, d.h. das Licht wird von einer Seite in die Messkammer eingestrahlt und verlässt die Messzelle auf der gegenüberliegenden Seite. Beim Reflektionsverfahren wird das Licht von einer Seite in die Messzelle eingestrahlt und auf der gegenüberliegenden Seite reflektiert, so dass es ein weiteres Mal durch die Probe geführt wird. Im einfachsten Fall sind Einfallseite und Spiegel parallel, müssen es aber nicht sein. Eine Messkammer für Transmissionsmessungen, bevorzugt mit einer Schichtdicke von <30 µm, ist mit mindestens einem MIR transparenten Fenster für den Lichteintritt und einem MIR transparentem Fenster für den Lichtaustritt versehen. Für Reflektionsmessungen, bevorzugt mit einer Schichtdicke von <15 µm, sind ein MIR transparentes Fenster und ein MIR Spiegel vorgesehen. Eine ATR-Messkammer ist mit dem ATR Wellenleiter versehen. In allen Fällen ist der IR-optisch aktive Bereich mit einer inerten Beschichtung versehen.

Jegliche Art der Anregung eines Moleküls des Analyten durch Aufnahme von Photonen im Wellenlängenbereich von nahem Infrarot- oder mittlerem Infrarotlicht kann mit Hilfe der erfindungsgemäßen Messkammer gemessen werden. Der Infrarot-Absorption in der Probe kann eine spätere Strahlungsabgabe in Form von Lumineszenz folgen.

Die Beschichtung kann durch physikalische oder chemische Interaktion erfolgen. Vorteilhaft ist, wenn die Kammerwand ein Substrat aufweist, an das die Beschichtung kovalent gebunden ist. Kovalent gebunden bedeutet, dass die Bindung der Beschichtung zur Oberfläche des Sensors mittels chemischer Bindungen erfolgt. Ein Beispiel für eine solche Bindung ist die Si-O Bindung.

Diese Beschichtung weist bevorzugt eine Monolage einer organischen Verbindung auf oder besteht aus einer solchen Monolage. Dadurch wird eine sehr geringe Schichtdicke der Beschichtung und somit eine entsprechend geringe Abschwächung der bei der Messung durch die Beschichtung hindurch tretenden Infrarotstrahlung ermöglicht. Verfahren zum Aufbringen von Monologen oder extrem dünnen homogenen Polylagen sind dem Fachmann hinreichend bekannt und z.B. in der EP 1 176 422 B1 oder der EP 1 144 677 B1 angeführt. Auf der Webseite der Firma Gelest (http://www.gelest.com) ist z.B. eine Broschüre mit Verfahrensanleitungen zur Herstellen solcher Beschichtungen erhältlich (Hydrophobicity.pdf).

Vorteilhaft ist, wenn die Beschichtung ein Silan aufweist. Die Beschichtung kann dann bei der Herstellung der Vorrichtung auf einfache Weise in einer Gasphase auf die Kammerwand aufgebracht werden. Ein Beispiel ist 2-[Methoxy(Polyethylenoxy)propyl]-trichlorsilan. Für besonders stabile Beschichtungen können auch spezielle Silane mit zwei oberflächenreaktiven Silangruppen pro Molekül verwendet werden, die wie z.B. Bis(triethoxysilyl)ethan. Eine weitere erfindungsgemäße Oberflächenmodifikation ist die Veränderung der Oberfläche der Messkammer durch Dotieren, Nanostrukturieren oder andere Prozesse, die in die Chemie oder Struktur der Oberfläche eingreifen.

Die Messkammer ist mit höchster Präzision parallel auszugestalten. Es können Spacer in die Kammerwand eingearbeitet sein oder es kann eine Zwischenschicht zwischen den Kammerwänden angeordnet sein. Unter "parallel" wird hier ein Innenwinkel von weniger als 2 Grad, bevorzugt weniger als 0,5 Grad, besonders bevorzugt weniger als 0,1 Grad verstanden. Eine hohe Parallelität der Kammerwände kann dadurch erreicht werden, dass die Kammerwände mit Methoden der Mikrosystemtechnik bearbeitet sind.

Bei einer Weiterbildung der Erfindung weist die Messkammer mindestens zwei Kammerwände auf, die mit ihren der Innenhöhlung zugewandten Oberflächen parallel zueinander angeordnet sind, wobei zwischen diesen Kammerwänden als Abstandshalter mindestens eine Zwischenschicht angeordnet ist, die im Bereich der Innenhöhlung einen Durchbruch aufweist, und dass die Kammerwände über die mindestens eine Zwischenschicht flächig miteinander verbunden sind. Die Messkammer kann dann mit Methoden der Mikrosystemtechnik als Schichtstapel hergestellt werden, bei der die der Innenhöhlung zugewandten Oberflächen der Kammerwände eine sehr hohe Parallelität aufweisen. Auch durch diese Maßnahme können die Messbedingungen bei der Infrarot-Absorptionsmessung mittel- bis langfristig konstant gehalten werden. Die Zwischenschicht kann beispielsweise aus Glas oder aus Gold bestehen. Sie kann mit Methoden der Mikrosystemtechnik mit exakt parallel zueinander verlaufenden Oberflächen hergestellt werden.

Bei einer zweckmäßigen Ausgestaltung der Erfindung ist die mindestens eine Zwischenschicht über eine physikalische und/oder chemische Verbindung mit den Kammerwänden verbunden. Dabei kann die Verbindung insbesondere eine Bondverbindung sein.

Bei einer anderen Ausgestaltung der Erfindung ist zwischen der mindestens einen Zwischenschicht und wenigstens einer Kammerwand eine Haftschicht angeordnet, über welche die Zwischenschicht indirekt mit der Kammerwand verbunden ist. Dabei ist es sogar möglich, dass die Haftschicht in die Kammerwand integriert ist.

Die Messkammer ist bevorzugt aus einem MIR transparenten Material aufgebaut, das mit industriellen Standardverfahren bearbeitet werden kann. Ein solches Material ist beispielsweise Silizium. Die Messkammer selbst kann durch Ätzen, Fräsen oder andere Strukturierungstechniken aufgebaut sein. Dabei müssen die Ein- und Austrittsbereiche des MIR Lichtes auf ihrer Oberfläche poliert sein, d.h. eine Rauhigkeit von weniger als 1 µm, bevorzugt 10 nm RMS, besonders bevorzugt weniger als 1 nm RMS aufweisen.

In der einfachsten Ausführung wird die Infrarot-Messkammer mit einer oder mehreren verschiedenen monochromatischen Lichtquellen unterschiedlicher Wellenlängen betrieben oder die einzelnen Wellenbereiche der Lichtquellen über Prismen in Licht einzelner Wellenlängen aufgeteilt. Die Messung der Absorption des Lichtes kann auf verschiedene Weise erfolgen. Die Abschwächung des Lichtes im Vergleich zur Referenz- bzw. Hintergrundmessung kann dann durch Messung der Lichtstärke mit einem geeigneten Detektor, z.B. einer Photodiode gemessen werden, in einer bevorzugten Ausführung über ein Array von Photodioden, besonders bevorzugt mit einer oder mehreren Photodioden für jede Wellenlänge im interessanten Wellenlängenbereich. Geeignete Detektoren sind dem Fachmann hinreichend bekannt und werden bereits in bestehenden Geräten verbaut. Geeignete Lichtquellen sind auch hinreichend bekannt und stehen kommerziell zur Verfügung, z.B. als Laserdioden. Wird polychromatisches Licht verwendet, so muss dieses zur Messung entsprechend prozessiert werden. Beispielsweise durch ein Interferometer (z.B. aber nicht ausschließlich ein Mach-Zehnder Interferometer) oder durch Aufspaltung einzelner Wellenlängenbereiche mittel eines oder mehrerer Prismen, die in der Vorrichtung, bevorzugt in der Messzelle integriert sind.

Die Vorrichtung kann eine maschinenlesbare Codierung aufweisen, in der Kalibrationsdaten für die infrarot-Absorption und/oder -Transmission der Messkammer und/oder die Adresse eines Datensatzes gespeichert ist, in dem die Kalibrationsdaten abgelegt sind. Die Kalibrationsdaten können also entweder selbst in der Codierung gespeichert sein oder die Codierung enthält nur eine Adresse, unter welcher die Kalibrationsdaten beispielsweise über das Internet oder eine Datenfernverbindung aus einer Datenbank abrufbar ist. In der Vorrichtung kann eine Anpassung der Kalibrationsdaten an gerätespezifische Parameter ggf rein rechnerisch erfolgen.

Zweckmäßig ist, wenn die Vorrichtung einen mit der Messkammer mechanisch und/oder elektronisch verbundenen Datenspeicher aufweist, in dem Kalibrationsdaten für die infrarot-Absorption und/oder -Transmission der Messkammer und/oder die Adresse eines Datensatzes gespeichert ist, in dem die Kalibrationsdaten abgelegt sind. Dabei ist es sogar möglich, dass der Datenspeicher und/oder eine Recheneinheit als integrierte Schaltung monolithisch mit der Messkammer integriert ist. Der Datenspeicher ist bevorzugt als nicht flüchtiger Halbleiterspeicher ausgestaltet.

Die mindestens eine Kammerwand kann mindestens zwei für Infrarotstrahlung durchlässige Wandungsbereiche haben, an denen die lichte Weite zwischen den Kammerwänden unterschiedlich ist bzw. in
denen die Innenhöhlung der Messkammer eine unterschiedliche Durchleuchtungsdicke hat. Dabei wird unter einer Durchleuchtungsdicke die Länge der Strecke verstanden, entlang der die Messkammer von der Infrarotstrahlung durchleuchtet wird. Höher konzentrierte Analyte können an Stellen mit einer geringen Durchleuchtungsdicke (z.B. 10 µm) und andere Analyte an Stellen mit einer hohen Durchleuchtungsdicke (z.B. 30 µm) gemessen werden. Die einander zugewandten Oberflächen der Wandungsbereiche verlaufen jeweils exakt parallel zu einander, so dass sich innerhalb der einzelnen Wandungsbereiche jeweils eine konstante Durchleuchtungsstärke der in der Messkammer befindlichen Probe ergibt.

In einer weiteren Ausführungsform der Erfindung weist die Vorrichtung mindestens ein optisches Element, insbesondere mindestens eine Fokussieroptik und/oder wenigstens einen optischen Reflektor auf, welches Element vorzugsweise mit der Messkammer monolithisch integriert ist. Dadurch kann die infrarote Strahlung nach dem Durchgang durch die Messkammer mit Hilfe von optischen Strukturen derart gebrochen werden, dass möglichst viel monochromatisches Licht auf den Detektoren empfangen wird. Die optischen Elemente können z.B. optische Gitter, Linsen und/oder Prismen umfassen. In einer besonders bevorzugten Ausführungsform der Erfindung sind diese Strukturen mit auf den Träger der Messkammer aufgebracht und einer weiteren bevorzugten Ausführungsform monolithisch in diesen integriert. Entsprechende Strukturen lassen sich durch lithographische Methoden z.B. in Silizium realisieren.

Erwähnt werden soll noch, dass die Messkammer austauschbar und/oder wieder verwendbar sein kann. Sie kann, muss aber nicht Teile der Optik oder die gesamte Optik integriert haben. Falls die Messkammer wieder verwendbar ist, dann ist die Besonderheit der Ausgestaltung der Messkammer, dass eine Reinigung mit einem einfachen Geräte- oder Nutzereingriff erfolgt, z.B. nach folgendem Muster:
- Einfaches Aussaugen der Probe, z.B. durch Aufsaugen durch ein Gewebe oder einen Unterdruck.
- Herausspülen durch Überdruck oder eine Spülflüssigkeit bzw. in Kombination.
- Rotation bzw. Zentrifugation oder Herausschütteln der Probe (Anwendung von Fliehkräften bzw. Beschleunigung),

Nachfolgend ist ein Ausführungsbeispiel der Erfindung anhand der Zeichnung näher erläutert. Es zeigt:
- Fig. 1: eine Durchfluss-Messkammer zum Bestimmen der Konzentration eines in einer flüssigen Probe enthaltenen Analyten mittels Infrarot-Absorptions- und/oder Transmissionsmessung,
- Fig. 2: einen Teilquerschnitt durch die Messkammer entlang der in Fig. 1 mit II bezeichneten Ebene, und
- Fig. 3: einen Teillängsschnitt durch die Messkammer entlang der in Fig. 1 mit III bezeichneten Ebene.

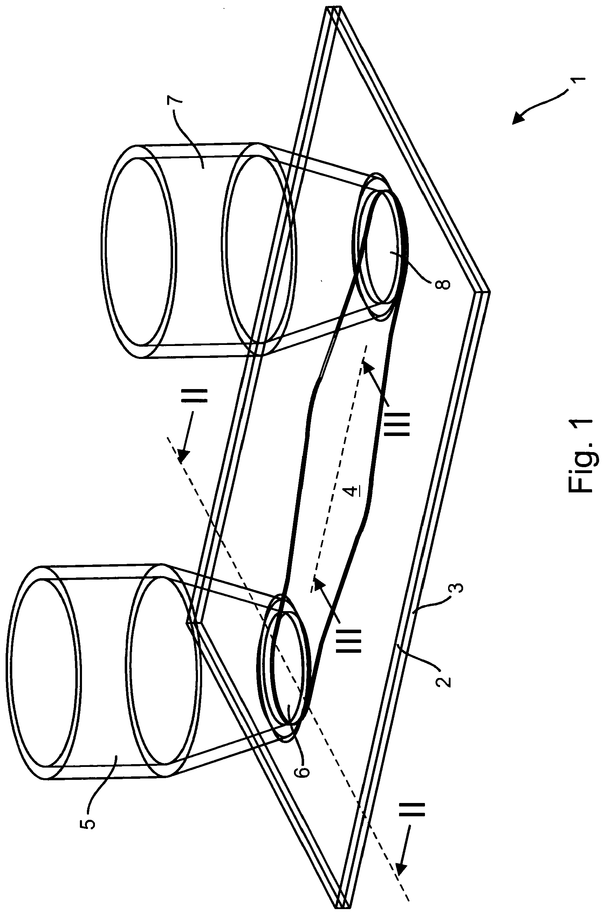

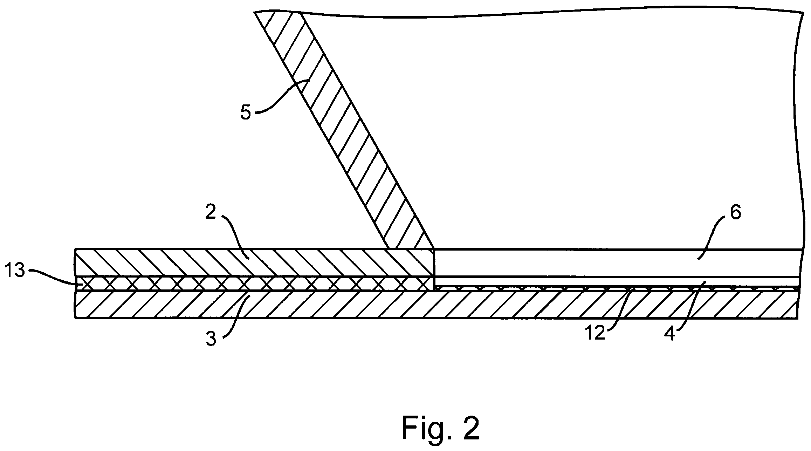

Eine in Fig. 1 im Ganzen mit 1 bezeichnete Vorrichtung zum Bestimmen der Konzentration wenigstens eines in einer fließfähigen Probe enthaltenen Analyten mittels Infrarot-Absorptions- und/oder Transmissionsmessung hat eine Messkammer, die Kammerwände 2, 3 aufweist, die eine Innenhöhlung 4 zur Aufnahme der Probe begrenzen. Wie in Fig. 2 erkennbar ist, ist zwischen den Kammerwänden 2, 3 ist als Abstandshalter eine Zwischenschicht 13 angeordnet, die im Bereich der Innenhöhlung 4 einen Durchbruch aufweist. Die Zwischenschicht 13 ist an ihrer einen Flachseite flächig und flüssigkeitsdicht mit der einen Kammerwand 2 und an ihrer gegenüberliegenden anderen Flachseite flächig und flüssigkeitsdicht mit der anderen Kammerwand 3 verbunden. Die Kammerwände 2, 3 und die Zwischenschicht 13 bilden also einen Schichtstapel mit parallel zueinander angeordneten, aufeinanderliegenden Schichten.

Die Innenhöhlung 4 hat eine mit einer Zuleitung 5 verbundene Einlassöffnung 6 für die Probe und eine von der Einlassöffnung 6 beabstandete, mit einer Ableitung 7 verbundene Auslassöffnung 8 für die Probe. Die Einlassöffnung 6 und die Auslassöffnung 8 sind jeweils durch einen Wandungsdurchbruch in der Kammerwand 2 gebildet. Die Zuleitung 5 und die Ableitung 7 sind jeweils als Kapillare ausgestaltet. Die Probenaufgabe und - falls erforderlich - Mischung erfolgt durch Kapillarkraft und ggf. Diffusion wie in Patent "Kapillarkraftmischer" von R. Seidel beschrieben (EP 1 251 946 B1, DE 100 02 500 A1) oder durch einfache Injektion, z.B. durch eine Pipette oder sonstiges Druckgefäß.

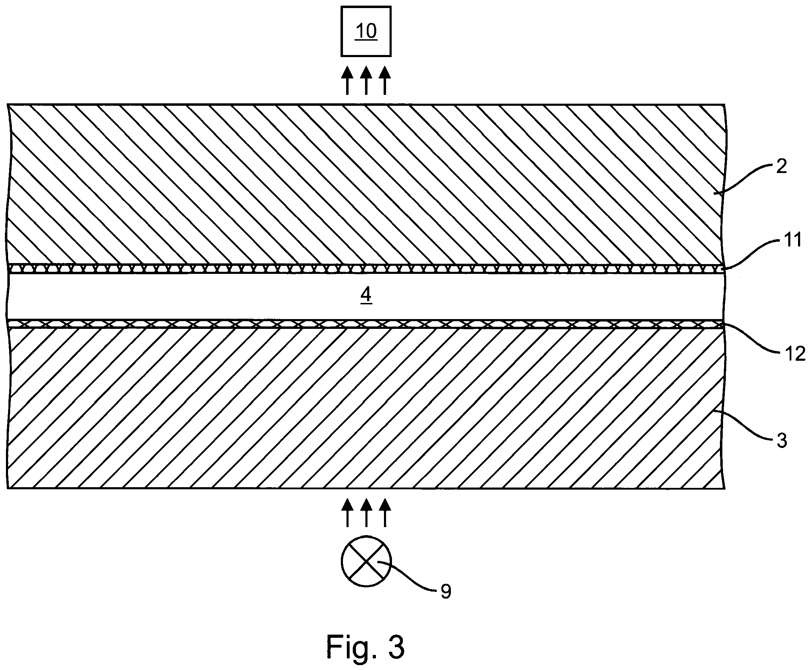

Die Kammerwände 2, 3 sind für Infrarotstrahlung durchlässig und werden von einer optischen Messstrecke durchsetzt, die zwischen einem in der Zeichnung nur schematisch dargestellten Infrarotstrahler 9 und einem wellenlängenselektiven optischen Sensor 10 gebildet ist. Bei dem in Fig. 3 gezeigten Ausführungsbeispiel ist der Sensor ein Durchlichtsensor. Es ist aber auch möglich, dass der Sensor als ATR-Sensor ausgestaltet ist. Während Durchlichtsensoren (Transmissions- und Reflektionssensoren) die Probe mit dem Infrarot-Licht durchstrahlen, kommt es bei den ATR-Sensoren durch die evaneszente Lichtführung zu einem mehrfachen Durchdringen der Probe, wobei die Eindringtiefe von der Wellenlänge und dem Reflexionswinkel abhängig ist.

Die Kammerwände 2, 3 weisen jeweils an ihrer an die Innenhöhlung angrenzenden Oberfläche eine dünne, inerte, für Infrarotstrahlung durchlässige Beschichtung 11, 12 auf. Die Beschichtungen 11, 12 überdecken zumindest die Bereiche der Kammerwände 2, 3, die von der Messstrecke durchsetzt werden. Bei der in der Zeichnung abgebildeten Ausführungsform der Erfindung sind beide Kammerwände 2, 3 beschichtet, also die Lichteintrittstelle an der unteren Kammerwand 3 und die Lichtaustrittstelle an der oberen Kammerwand 4. Bei einer ATR Messzelle muss mindestens der lichtleitende Bereich der ATR-Messzelle mit der Beschichtung versehen sein. In einer bevorzugten Ausführungsförm ist jedoch die gesamte Messkammer mit der Beschichtung versehen.

Während bei Transmissions- und Reflektionssensoren die Exaktheit der Schichtdicke und die Parallelität der Beschichtung 11, 12 absolut notwendig ist, wird die zugängliche Schichtdicke von ATR Sensoren durch die Eindringtiefe des Evaneszenzfeldes bestimmt. D.h. die Dicke der Messkammer ist nicht relevant, sofern die Schichtdicke größer als die Eindringtiefe des Evaneszenzfeldes ist. Infrarot-Sensoren zur Durchlichtmessung können z.B. aus Calciumfluorid, Silizium oder anderen IR-transparenten Materialien ganz oder teilweise gefertigt sein. Ein ATR Sensor weist einen Wellenleiter auf, der in der Lage ist, Infrarot-Licht über Totalreflektion zu führen. Geeignete Medien für einen ATR Sensor sind z.B. Zinkselenid, Germanium, Thalliumbromoiodid (KRS-5), Silizium, AMTIR (von engl. amorphous material transmitting infrared radiation, z. B. GeAsSe = AMTIR-1) oder Diamant.

Ein ATR Wellenleiter kann z.B. aus einem Siliziumwafer hergestellt werden. Eine besondere Art des ATR Wellenleiters sind Dünnfilmwellenleiter, die aus einer sehr dünnen Schicht auf einem Träger bestehen und die im Extremfall monomodale Wellenleiter darstellen. Mittleres Infrarot Licht im Sinne der Erfindung ist Licht mit der Wellenlänge 2 µm bis 50 µm, bevorzugt 3 µm bis 15 µm, besonders bevorzugt 3,3 µm bis 12,5 µm. Ein geeigneter Sensor sollte in diesem Bereich weitgehend durchlässig für das Infrarot-Licht sein. Für bestimmte Anwendungen reicht es jedoch aus, wenn der Sensor für die Wellenlängen des Analytes durchlässig ist.

Die Beschichtung 11, 12 der Messkammer interferiert bevorzugt nicht oder nur gering mit der Infrarot-Absorption in der Messkammer. Jedoch kann die Beschichtung 11, 12 auch so gewählt sein, dass die Absorption der Beschichtung 11, 12 und die Absorption des gewünschten Analyten zumindest teilweise unterschiedlich sind, so dass die Bestimmung trotz Absorption der Beschichtung möglich ist und eine eventuelle Degradation oder Abnutzung der Beschichtung 11, 12 erfasst werden kann.

### Herstellen einer Messkammer aus Silizium

Die Messkammer kann durch Standardmethoden der Mikrotechnik und Kombination daraus erfolgen. Zur Erzeugung der Messkammer bieten sich z.B. folgende Verfahren oder deren Kombination an:
- Ätzen, nasschemisch (anisotrop oder isotrop, im Falle von Silizium z.B. KOH, TMAH) oder trockenchemisch (physikalisch) wie z.B. RIE oder auch feinmechanisch. Die Innenhöhlung 4 der Messkammer kann z.B. durch Bonden mit einem geeigneten Material verschlossen werden, z.B. Silizium mit Glas oder Silizium mit Silizium über eine eutektische Schicht.
- Beide Messkammer-Oberflächen werden über Spacer zusammengefügt, der die Dicke der benötigten Messkammer enthält.
- Einfügen einer Opferschicht, anschließendes Verbinden und Aufbringen der Spacerschicht, schließlich entfernen ("opfern") der Opferschicht.

Hierbei muss darauf geachtet werden, dass die Oberflächenqualität in außergewöhnlicher Güte vorliegt.

### Reinigen und Aktivieren der Oberfläche

Die zu beschichtenden Oberflächenbereiche der Kammerwände 2, 3 müssen vor der Beschichtung von Fetten, Ölen und anderem Belag befreit werden. Dazu wird die Oberfläche wenn möglich mit Piranha (70% Konz. Schwefelsäure, 30% konz. Wasserstoffperoxyd) für 10 Minuten inkubiert und anschließend gründlich mit Aqua dest. gewaschen und mit ölfreiem Stickstoff komplett trocken geblasen. Oberflächen die nicht Piranha resistent sind können auch im Plasmaofen oder mit anderen geeigneten Mitteln gereinigt werden.

## Patentansprüche

1. Vorrichtung (1) zum Bestimmen der Konzentration wenigstens eines in einer Probe enthaltenen Analyten mittels infrarot-Absorptions- und/oder Transmissionsmessung, umfassend eine Messkammer, die eine Innenhöhlung (4) zur Aufnahme der Probe aufweist, wobei die Innenhöhlung (4) durch mindestens eine Kammerwand (2, 3) begrenzt ist, die für Infrarotstrahlung durchlässig ist, wobei die mindestens eine Kammerwand (2, 3) an ihrer an die Innenhöhlung (4) angrenzenden Oberfläche eine homogene, für Infrarotstrahlung durchlässige Beschichtung (11, 12) aufweist, **dadurch gekennzeichnet dass** die Beschichtung (11, 12) ein Copolymer aufweist, das funktionelle Gruppen und Gruppen enthält, die inert wirken, nämlich fluorierte Kohlenwasserstoffgruppen oder Polyethergruppen.

2. Vorrichtung (1) nach Anspruch 1 **dadurch gekennzeichnet, dass** die Schichtdicke der Beschichtung (11, 12) kleiner als 1 µm ist.

3. Vorrichtung (1) nach Anspruch 1 oder 2, **dadurch gekennzeichnet, dass** die Schichtdicke der Beschichtung (11, 12) kleiner als 10 nm ist.

4. Vorrichtung (1) nach einem der Ansprüche 1 bis 3, **dadurch gekennzeichnet, dass** die Kammerwand (2, 3) ein Substrat aufweist, an das die Beschichtung (11, 12) kovalent gebunden ist.

5. Vorrichtung (1) nach einem der Ansprüche 1 bis 4, **dadurch gekennzeichnet, dass** die Beschichtung (11, 12) eine Monolage einer organischen Verbindung aufweist oder aus einer solchen Monolage besteht.

6. Vorrichtung (1) nach einem der Ansprüche 1 bis 5, **dadurch gekennzeichnet, dass** die Beschichtung (11, 12) ein Silan aufweist.

7. Vorrichtung (1) nach einem der Ansprüche 1 bis 6, **dadurch gekennzeichnet, dass** die funktionellen Gruppen Sulfonsäuren sind.

8. Vorrichtung (1) nach einem der Ansprüche 1 bis 6, **dadurch gekennzeichnet, dass** die funktionellen Gruppen Phosphonsäuren sind.

9. Vorrichtung (1) nach einem der Ansprüche 1 bis 8, **dadurch gekennzeichnet, dass** die Kammerwände mit Methoden der Mikrosystemtechnik bearbeitet sind und/oder dass die Messkammer mindestens zwei Kammerwände (2, 3) aufweist, die mit ihren der Innenhöhlung (4) zugewandten Oberflächen parallel zueinander angeordnet sind, und dass zwischen diesen Kammerwänden (2, 3) als Abstandshalter mindestens eine Zwischenschicht (13) angeordnet ist, die im Bereich der Innenhöhlung (4) einen Durchbruch aufweist, und dass die Kammerwände (2, 3) über die mindestens eine Zwischenschicht (13) flächig miteinander verbunden sind.

10. Vorrichtung (1) nach Anspruch 9, **dadurch gekennzeichnet, dass** die mindestens eine Zwischenschicht (13) über eine physikalische und/oder chemische Verbindung mit den Kammerwänden (2, 3) verbunden ist.

11. Vorrichtung (1) nach Anspruch 9, **dadurch gekennzeichnet, dass** zwischen der mindestens einen Zwischenschicht (13) und wenigstens einer Kammerwand (2, 3) eine Haftschicht angeordnet ist, über welche die Zwischenschicht (13) indirekt mit der Kammerwand (2, 3) verbunden ist.

12. Vorrichtung (1) nach einem der Ansprüche 1 bis 11, **dadurch gekennzeichnet, dass** sie mindestens ein optisches Element, insbesondere mindestens eine Fokussieroptik und/oder wenigstens einen optischen Reflektor aufweist, welches Element vorzugsweise mit der Messkammer monolithisch integriert ist.

13. Verfahren (1) zum Bestimmen der Konzentration wenigstens eines in einer Probe enthaltenen Analyten mittels Infrarot-Absorptions- und/oder Transmissionsmessung, umfassend folgende Schritte:
- Bereitstellen einer Vorrichtung (1) nach Anspruch 1,
- Einbringen eines Referenzmediums in die Innenhöhlung,
- Erfassung eines von der Infrarot-Absorption und/oder -Transmission der durch die Kammerwand 2, 3), die Beschichtung (11, 12) und die Referenzflüssigkeit gebildeten Anordnung abhängigen Referenzsignals,
- Entfernen der Referenzflüssigkeit aus der Innenhöhlung (4),
- Einbringen der Probe in die Innenhöhlung (4),
- Erfassung eines von der Infrarot-Absorption der durch die mindestens eine Kammerwand (2, 3), die Beschichtung (11, 12) und die Probe gebildeten Anordnung, abhängigen Messsignals,
- Ermitteln eines von dem Unterschied zwischen dem Referenzsignal und dem Messsignal abhängigen kalibrierten Messsignals.

## Claims

1. Device (1) for determining the concentration of at least one analyte present in a sample by means of infrared absorption and/or transmission measurement, comprising a measurement chamber having an inner cavity (4) for accommodating the sample, the inner cavity (4) being delimited by at least one chamber wall (2, 3) which is penetrable for infrared radiation, the at least one chamber wall (2, 3) having on its surface adjoining the inner cavity (4) a homogeneous coating (11, 12) penetrable for infrared radiation, **characterized in that** the coating (11, 12) comprises a copolymer containing functional groups and groups having an inert effect, specifically fluorinated hydrocarbon groups or polyether groups.

2. Device (1) according to Claim 1, **characterized in that** the layer thickness of the coating (11, 12) is less than 1 µm.

3. Device (1) according to Claim 1 or 2, **characterized in that** the layer thickness of the coating (11, 12) is less than 10 nm.

4. Device (1) according to any of Claims 1 to 3, **characterized in that** the chamber wall (2, 3) comprises a substrate to which the coating (11, 12) is covalently bonded.

5. Device (1) according to any of Claims 1 to 4, **characterized in that** the coating (11, 12) comprises a monolayer of an organic compound or consists of such a monolayer.

6. Device (1) according to any of Claims 1 to 5, **characterized in that** the coating (11, 12) comprises a silane.

7. Device (1) according to any of Claims 1 to 6, **characterized in that** the functional groups are sulphonic acids.

8. Device (1) according to any of Claims 1 to 6, **characterized in that** the functional groups are phosphonic acids.

9. Device (1) according to any of Claims 1 to 8, **characterized in that** the chamber walls are machined using microsystems technology methods and/or that the measurement chamber comprises at least two chamber walls (2, 3), the surfaces of which facing the inner cavity (4) are arranged in parallel to one another, and that at least one intermediate layer (13) is arranged between said chamber walls (2, 3) as spacer, which intermediate layer has a gap in the region of the inner cavity (4), and that the chamber walls (2, 3) are joined to one another in a planar manner via the at least one intermediate layer (13).

10. Device (1) according to Claim 9, **characterized in that** the at least one intermediate layer (13) is joined to the chamber walls (2, 3) via a physical and/or chemical bond.

11. Device (1) according to Claim 9, **characterized in that** an adhesive layer is arranged between the at least one intermediate layer (13) and at least one chamber wall (2, 3), via which adhesive layer the intermediate layer (13) is indirectly joined to the chamber wall (2, 3).

12. Device (1) according to any of Claims 1 to 11, **characterized in that** it comprises at least one optical element, especially at least one focusing optical unit and/or at least one optical reflector, which element is preferably monolithically integrated with the measurement chamber.

13. Method (1) for determining the concentration of at least one analyte present in a sample by means of infrared absorption and/or transmission measurement, comprising the following steps:
- providing a device (1) according to Claim 1,
- introducing a reference medium into the inner cavity,
- capturing a reference signal dependent on the infrared absorption and/or infrared transmission of the arrangement formed by the chamber wall (2, 3), the coating (11, 12) and the reference liquid,
- removing the reference liquid from the inner cavity (4),
- introducing the sample into the inner cavity (4),
- capturing a measurement signal dependent on the infrared absorption of the arrangement formed by the at least one chamber wall (2, 3), the coating (11, 12) and the sample,
- determining a calibrated measurement signal dependent on the difference between the reference signal and the measurement signal.

## Revendications

1. Dispositif (1) pour la détermination de la concentration d'au moins un analyte contenu dans un échantillon au moyen d'une mesure par absorption et/ou transmission infrarouge, comprenant une chambre de mesure, qui présente une cavité interne (4) destinée à recevoir l'échantillon, dans lequel la cavité interne (4) est limitée par au moins une paroi de chambre (2, 3) qui est perméable au rayonnement infrarouge, dans lequel ladite au moins une paroi de chambre (2, 3) présente sur la surface adjacente à la cavité interne (4) un revêtement homogène (11, 12) perméable au rayonnement infrarouge, **caractérisé en ce que** le revêtement (11, 12) présente un copolymère, qui contient des groupes fonctionnels et des groupes, qui opèrent de façon inerte, à savoir des groupes hydrocarbonés fluorés ou des groupes polyéther.

2. Dispositif (1) selon la revendication 1, **caractérisé en ce que** l'épaisseur de couche du revêtement (11, 12) est inférieure à 1 µm.

3. Dispositif (1) selon la revendication 1 ou 2, **caractérisé en ce que** l'épaisseur de couche du revêtement (11, 12) est inférieure à 10 nm.

4. Dispositif (1) selon l'une quelconque des revendications 1 à 3, **caractérisé en ce que** la paroi de chambre (2, 3) présente un substrat, auquel le revêtement (11, 12) est lié par covalence.

5. Dispositif (1) selon l'une quelconque des revendications 1 à 4, **caractérisé en ce que** le revêtement (11, 12) présente une monocouche d'un composé organique ou se compose d'une telle monocouche.

6. Dispositif (1) selon l'une quelconque des revendications 1 à 5, **caractérisé en ce que** le revêtement (11, 12) présente un silane.

7. Dispositif (1) selon l'une quelconque des revendications 1 à 6, **caractérisé en ce que** les groupes fonctionnels sont des acides sulfoniques.

8. Dispositif (1) selon l'une quelconque des revendications 1 à 6, **caractérisé en ce que** les groupes fonctionnels sont des acides phosphoniques.

9. Dispositif (1) selon l'une quelconque des revendications 1 à 8, **caractérisé en ce que** les parois de chambre sont usinées avec des méthodes de la technique des microsystèmes et/ou **en ce que** la chambre de mesure présente au moins deux parois de chambre (2, 3), qui sont disposées parallèlement l'une à l'autre avec leurs surfaces tournées vers la cavité interne (4), et **en ce qu'**au moins une couche intermédiaire (13) est disposée entre ces parois de chambre (2, 3) en tant qu'élément d'écartement, et présente un passage dans la région de la cavité interne (4), et **en ce que** les parois de chambre (2, 3) sont reliées à plat l'une à l'autre au moyen de ladite au moins une couche intermédiaire (13).

10. Dispositif (1) selon la revendication 9, **caractérisé en ce que** ladite au moins une couche intermédiaire (13) est liée aux parois de chambre (2, 3) par une liaison physique et/ou chimique.

11. Dispositif (1) selon la revendication 9, **caractérisé en ce qu'**une couche d'adhérence, par laquelle la couche intermédiaire (13) est indirectement liée à la paroi de chambre (2, 3), est disposée entre ladite au moins une couche intermédiaire (13) et au moins une paroi de chambre (2, 3).

12. Dispositif (1) selon l'une quelconque des revendications 1 à 11, **caractérisé en ce qu'**il présente au moins un élément optique, en particulier au moins une optique de focalisation et/ou au moins un réflecteur optique, élément qui est de préférence intégré de façon monolithique à la chambre de mesure.

13. Procédé (1) pour la détermination de la concentration d'au moins un analyte contenu dans un échantillon au moyen d'une mesure par absorption et/ou transmission infrarouge, comprenant les étapes suivantes:
- préparer un dispositif (1) selon la revendication 1,
- introduire un milieu de référence dans la cavité interne,
- détecter un signal de référence dépendant de l'absorption et/ou transmission infrarouge de l'agencement formé par la paroi de chambre (2, 3), le revêtement (11, 12) et le liquide de référence,
- retirer le liquide de référence hors de la cavité interne (4),
- introduire l'échantillon dans la cavité interne (4),
- détecter un signal de mesure dépendant de l'absorption et/ou transmission de l'agencement formé par ladite au moins une paroi de chambre (2, 3), le revêtement (11, 12) et l'échantillon,
- déterminer un signal de mesure calibré dépendant de la différence entre le signal de référence et le signal de mesure.
